# NOUVEAU FASCICULE DE BREVET EUROPEEN

(11) **EP 1 532 391 B2**
(45) Date de publication et mention de la décision concernant l'opposition: **06.03.2019**
(45) Mention de la délivrance du brevet: 18.03.2009
(21) Numéro de dépôt: 03760735.5
(22) Date de dépôt: 18.06.2003
(51) Int. Cl.: F16L 59/02

(54) **PANNEAU D ISOLATION POUR CONDUIT DE DISTRIBUTION**
ISOLIERPLATTE FüR ZUFUHRKANAL
INSULATION PANEL FOR SUPPLY DUCT

(30) Priorité: 24.06.2002 ES 201600000 U; 24.06.2002 ES 201600001 U
(43) Date de publication de la demande: 25.05.2005
(73) Titulaire: SAINT-GOBAIN ISOVER, 92400 Courbevoie (FR)
(72) Inventeur: NAVARRO NIEDERCORN, Gabriel, E-28037 Madrid (ES)
(74) Mandataire: Saint-Gobain Recherche
(86) Numéro de dépôt international: PCT/FR2003/001854
(87) Numéro de publication internationale: WO 2004/001277

(56) Documents cités:
- DE-B- 1 190 391
- DE-B- 1 190 391
- ES-U- 201 600 000
- ES-U- 201 600 001
- FR-A- 2 409 855
- FR-A- 2 740 804
- FR-A1- 2 409 755
- GB-A- 2 189 273
- US-A- 3 092 529
- US-A- 4 064 626
- US-A- 4 064 627
- US-A- 4 179 808
- US-A- 4 183 379
- US-A- 5 040 297
- US-A- 5 750 225
- US-A- 5 783 268
- US-A1- 2001 003 993
- US-A1- 2001 003 993

## Description

La présente invention se rapporte à un panneau d'isolation pour conduit de distribution d'air conditionnée, ledit panneau d'isolation comportant au moins une âme isolante à base de laine minérale, de préférence de laine de verre, et comportant une couche extérieure par exemple à base d'une fine pellicule d'aluminium.

Par exemple, le document FR 2 740 804 décrit un tel panneau d'isolation comportant une âme isolante à base de laine minérale et une couche extérieure à base d'aluminium.

La présente invention concerne plus particulièrement la fabrication dans les bâtiments de conduits pour le transport et la distribution d'air conditionnée. De tels conduits présentent en général une structure métallique composée d'un châssis autoporté et de plaques de métal disposées entre les montants de ce châssis, ainsi qu'à l'intérieur de ce conduit, une isolation fabriquée à partir de panneaux d'isolation. La fabrication de ces conduits de transport et de distribution de l'air conditionnée nécessite de réaliser des changements de direction du conduit, afin d'assurer la distribution de l'air en différents points.

L'art antérieur connaît un procédé de fabrication de conduits d'isolation selon lequel on décompose l'angle du changement de direction en un grand nombre d'angles de valeurs inférieures. Ainsi, selon ce procédé, le changement de direction est très progressif et les valeurs intrinsèques du courant d'air ne subissent qu'une légère modification au fur et à mesure que le courant progresse dans le changement de direction.

Le but de l'invention est de permettre de diminuer les pertes de charges engendrées dans les changements de direction réalisés selon le procédé de l'art antérieur, tout en facilitant la réalisation des changements de direction.

La présente invention a ainsi pour objet un panneau d'isolation pour conduit de distribution d'air conditionnée selon la revendication 1.

Ce panneau d'isolation comporte une âme isolante à base de laine minérale, de préférence de laine de verre, et comporte une couche extérieure par exemple à base d'une fine pellicule d'aluminium. Ce panneau présente en outre, sur une face extérieure une pluralité de marques rectilignes et obliques par rapport à une direction longitudinale dudit panneau, lesdites marques formant dieux faisceaux d'inclinaisons contraires et orientées selon un angle γ par rapport à ladite direction longitudinale.

Ledit angle γ est, est égal à 67,5°.

Ladite face extérieure du panneau présente en outre, de préférence, une pluralité de marques rectilignes transversales orientées perpendiculairement à ladite direction longitudinale. Elle présente une pluralité de marques rectilignes longitudinales orientées parallèlement à ladite direction longitudinale.

Lesdites marques rectilignes obliques, et éventuellement lesdites marques rectilignes transversales et/ou lesdites marques rectilignes longitudinales sont, de préférence, matérialisées au moins à proximité de bords longitudinaux et de préférence sur toute la surface de la face extérieure.

Lesdites marques rectilignes obliques, et éventuellement lesdites marques rectilignes transversales et/ou lesdites marques rectilignes longitudinales sont matérialisées sur la surface de la face extérieure de la couche extérieure du panneau.

Dans une variante, lesdites marques rectilignes transversales et/ou lesdites marques rectilignes longitudinales coupent lesdites marques rectilignes obliques en des points où des marques rectilignes longitudinales d'inclinaisons contraires se coupent.

Les marques de guidage obliques, transversales et rectilignes permettent ainsi de faciliter la fabrication des conduits d'isolation et de gagner du temps et de la précision lors de la réalisation des tracés et des coupes sur site.

Les marques sont dessinées de façon à coïncider sur les quatre faces du conduit une fois les coupes nécessaires effectuées, sans aucun décalage, à condition toutefois que les mesures intérieures soient des multiples de 5 cm.

La présente invention se rapporte également à un conduit de distribution présentant une section sensiblement parallélépipédique, ledit panneau étant constitué à partir d'au moins un panneau d'isolation selon l'invention.

Ce conduit présente, de préférence, un axe principal longitudinal P et au moins un changement de direction selon un angle β, modifiant l'axe principal longitudinal P en un axe aval P', P", ledit angle β étant compris sensiblement entre 30° et 60° et de préférence égal sensiblement à 45°.

Le présent exposé se rapporte également un procédé de fabrication d'un conduit de distribution à section sensiblement parallélépipédique à l'aide d'au moins un panneau d'isolation selon l'invention.

Selon ce procédé de fabrication, ledit conduit présente un axe principal longitudinal P et au moins un changement de direction selon un angle β, modifiant l'axe principal longitudinal P en un axe aval P', P", ledit angle β étant compris sensiblement entre 30° et 60° et de préférence égal sensiblement à 45°.

Ce procédé permet ainsi de réaliser une multitude de figures avec une diminution importante des pertes de charge par rapport aux figures de l'art antérieur.

On appelle « figure » tout conduit non droit résultant d'un changement de direction de son axe principal avec ou sans séparation du flux d'air (par exemple : coude d'angle supérieur à 90° ou égal à 90°, inflexion, ramification simple selon un angle droit avec ou sans modification de la section du conduit principal, ramification double à angle droit,...).

On désigne par ramification la figure qui donne lieu à une bifurcation du flux d'air circulant dans le réseau, en modifiant la direction d'une partie du flux circulant (ramification simple ou en « r ») ou en modifiant la direction de la totalité du flux circulant (ramification double ou en « pantalon »). Pour assurer une distribution adéquate, la branche amont d'une ramification est toujours celle de plus grande section.

Par « direction transversale » au sens de la présente invention, on entend une direction orientée perpendiculairement à la direction longitudinale générale du conduit.

Selon une première variante de mise en oeuvre, ledit changement de direction est réalisé par découpage dans un panneau plat de chacune des faces dudit conduit.

Dans cette première variante, les faces du conduit qui sont parallèles au plan comprenant ledit changement de direction présentent, de préférence, chacune plus de quatre côtés dans ce plan et de préférence six côtés ou huit côtés.

Selon une deuxième variante de mise en oeuvre, ledit changement de direction est réalisé par section complète d'un conduit en un tronçon primaire aval et éventuellement un tronçon secondaire aval, ainsi que, éventuellement, rotation autour de son axe principal dudit tronçon primaire, ou du tronçon secondaire.

Selon cette deuxième variante, ladite section est, de préférence, réalisée sur deux faces parallèles au plan comprenant ledit changement de direction selon un angle β, par rapport à une direction transversale de ces faces et sur les deux autres faces selon une direction transversale de ces faces.

Le découpage selon la première variante ou la section selon la deuxième variante est, de préférence, opéré à l'aide d'un instrument de découpage présentant deux lames situées dans un même plan, les bords tranchant respectivement desdites lames étant orientés selon des inclinaisons contraires et le premier bord tranchant présentant une hauteur inférieure au deuxième bord tranchant selon la direction générale de découpage ou de section.

Avec la méthode antérieure de construction, pour fabriquer une figure (un coude, une bifurcation, ...), on pratique des ouvertures dans la face du panneau qui reste à l'intérieur du conduit (puisque c'est la seule façon de le plier suivant la courbure souhaitée). L'intérieur du conduit comporte donc des irrégularités, même si ces faces sont couvertes d'un ruban Ces irrégularités soumettent l'air traversant le conduit à de multiples changements de direction, créent des tourbillons et occasionnent donc des pertes de charge.

Avantageusement, la méthode permet d'éliminer ces irrégularités et donc de réduire les pertes de charge à travers le conduit. En outre, elle permet d'éviter les dépôts de poussières, saletés, etc. produits par ces irrégularités.

Avantageusement également, la méthode assure une meilleure rigidité des figures que la méthode antérieure, puisqu'elle utilise au départ un conduit droit, la pièce la plus résistante du réseau.

Avantageusement enfin, la méthode permet de diminuer d'une manière importante le nombre de chutes de matière isolante inutilisées, et la surface totale de ces chutes, ce qui facilite l'entretien du chantier et permet de réaliser des économies de matière.

Le présent exposé se rapporte également à un instrument de découpage pour le découpage d'au moins un panneau d'isolation selon l'invention, cet instrument présentant deux lames situées dans un même plan, les bords tranchant respectivement desdites lames étant orientés selon des inclinaisons contraires et le premier bord tranchant présentant une hauteur inférieure au deuxième bord tranchant selon la direction générale de découpage.

Dans une variante, lesdites lames sont orientées selon un angle δ par rapport à une surface de guidage.

Dans une version préférée, γ = δ.

De préférence, le premier bord tranchant présente une hauteur inférieure à l'épaisseur totale du panneau et le deuxième bord tranchant présente une hauteur supérieure à l'épaisseur totale du panneau.

L'instrument de découpage assure une coupe propre et précise, suivant l'inclinaison adaptée à la formation des figures, d'où un raccord parfait entre les pièces coupées formant les figures. Ces pièces restent intimement unies grâce à la colle, assurant un joint parfait équivalent à celui unissant deux tronçons droits.

La présente invention sera mieux comprise à la lecture de la description détaillée ci-après d'exemples de réalisation non limitatifs et des figures ci-jointes :
- La figure 1 illustre une vue de profil d'un conduit tubulaire droit pour la réalisation d'un changement de direction selon un angle β ;
- La figure 2 illustre une vue de profil du conduit tubulaire de la figure 1 après réalisation du changement de direction selon l'angle β;
- La figure 3 est un tableau illustrant les différences de perte de charge entre les changements de direction réalisés selon le procédé de l'art antérieur et le procédé pour deux types de section de conduit : 30x30 cm et 39x32 cm ;
- La figure 4 illustre une vue de face d'un panneau marqué et près à être découpé pour la réalisation de deux changements de direction pour réaliser un changement de direction à angle droit selon la première variante du procédé ;
- La figure 5 illustre une vue de face d'un panneau près à être marqué et à être découpé pour la réalisation de deux changements de direction pour réaliser un changement de direction à angle droit selon la deuxième variante du procédé ;
- La figure 6 illustre une vue en perspective d'un panneau selon l'invention pour la réalisation d'un conduit tubulaire ;
- Les figures 7, 8 et 9 illustrent la réalisation d'un conduit tubulaire à partir du panneau de la figure 6 replié à angle droit selon quatre arêtes longitudinales, la figure 9 étant une vue de détail de la figure 8 ;
- La figure 10 est une vue en perspective de l'opération de découpage d'un conduit tubulaire pour la réalisation d'un changement de direction selon la deuxième variante du procédé ;
- La figure 11 illustre une vue en coupe transversale d'un panneau pendant l'attaque du bord extérieur du panneau à l'aide d'un instrument de découpage ;
- La figure 12 illustre une vue en coupe transversale d'un panneau pendant l'attaque du bord inférieur du panneau à l'aide d'un instrument de découpage ;
- La figure 13 illustre une vue en perspective partielle d'un conduit tubulaire avant l'attaque du bord du panneau à l'aide d'un instrument de découpage ;
- La figure 14 illustre une vue de face d'une première version de l'instrument de découpage à lames droites et la figure 15 illustre une vue de face d'une seconde version de l'instrument de découpage à lames inclinées ;
- Les figures 16 à 18 illustrent la réalisation d'un changement de direction selon un angle α, complémentaire de l'angle β, non droit dans un conduit tubulaire selon la deuxième variante de mise en oeuvre du procédé ;
- Les figures 19 à 21 illustrent la réalisation d'un changement de direction selon un angle α, complémentaire de l'angle β, droit dans un conduit tubulaire selon la deuxième variante de mise en oeuvre du procédé, la figure 21 étant complétée d'un tableau exposant les écartements D₁ entre le conduit principal et le tronçon secondaire en fonction de la longueur minimale A₁ du tronçon primaire ;
- Les figures 22 à 25 illustrent la réalisation d'un changement de direction réalisant une déviation sans changement d'orientation générale dans un conduit tubulaire selon la deuxième variante de mise en oeuvre du procédé, la figure 25 étant complétée d'un tableau exposant les écartements D₂ entre le conduit principal et le tronçon secondaire en fonction de la longueur minimale A₂ du tronçon primaire ;
- Les figures 26 à 28 illustrent la réalisation d'un changement de direction réalisant une ramification simple selon un angle α droit dans un conduit tubulaire selon la deuxième variante de mise en oeuvre du procédé , sans modification de la section du conduit principal ;
- Les figures 29 à 34 illustrent la réalisation d'un changement de direction réalisant une ramification simple selon un angle α droit dans un conduit tubulaire selon la deuxième variante de mise en oeuvre du procédé avec réduction de la section du conduit principal ; et
- Les figures 35 à 41 illustrent la réalisation d'un changement de direction réalisant une ramification double selon deux angles α droits dans un conduit tubulaire selon la deuxième variante de mise en oeuvre du procédé.

Il est précisé que les proportions entre les divers éléments représentés ne sont pas rigoureusement respectées dans ces figures afin d'en faciliter la lecture.

Il est également précisé que les directions avant-arrière s'entendent par rapport au sens du flux d'air, en considérant que la conduite est fabriquée en partant de la source du flue d'air.

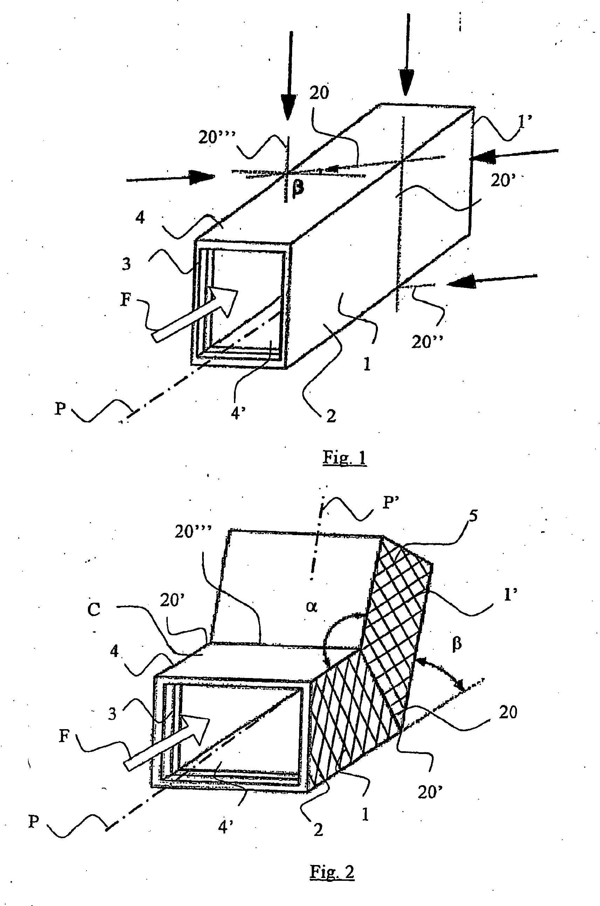

La présente invention se rapporte à la réalisation de conduits de distribution d'air conditionnée (1) à section sensiblement parallélépipédique, tel que celui illustré sur les figures 1 et 2, à l'aide d'au moins un panneau d'isolation (2) comportant au moins une couche isolante (3) en laine minérale et de préférence en laine de verre, ledit conduit (1) présentant un axe principal longitudinal P. Le conduit d'isolation (1) est destiné à permettre de véhiculer un flux d'air de conditionnement F, l'amont du conduit étant relié à au moins une source d'air conditionnée (non illustrée) et l'aval du conduit étant relié à au moins une bouche de distribution d'air conditionnée (également non illustrée). Le flux d'air F est orienté sensiblement selon l'axe principal P.

Les conditions minimales de fabrication et de montage de systèmes de conduits tubulaire à âme en laine de verre pour la circulation forcée d'air à des pressions négatives ou positives allant jusqu'à 500 Pa et des vitesses maximales de 10 m/s sont définies dans une norme. Les conduits CLIMAVER PLUS et SISTEMA CLIMAVER METAL de la société SAINT GOBAIN ISOVER conviennent à la mise en oeuvre de la présente invention et au respect de la norme car ils admettent des pressions allant jusqu'à 800 Pa et des vitesses maximales de 18 m/s. Le conduit (1) qui est destiné à être disposé dans un conduit métallique (non illustré) afin de former un conduit de transport d'air conditionné, sera décrit plus en détail ci-après.

Le présent exposé se rapporte plus particulièrement à un procédé d'élaboration d'une figure de conduit, afin de permettre de réaliser au moins un changement de direction C selon un angle α, ou son angle complémentaire β, modifiant l'axe principal longitudinal P, en un axe aval primaire P', voire en un axe aval secondaire P", c'est-à-dire faisant intervenir un changement de direction simple ou avec séparation de flux d'air.

En effet, lors de l'installation de conduits de transport d'air conditionnée dans un bâtiment, il peut arriver très exceptionnellement que le conduit soit parfaitement rectiligne sur toute sa longueur, sans aucun changement de direction, ni par rapport à l'horizontale, ni par rapport à la verticale entre la source d'air conditionné et la bouche d'évacuation ; mais dans l'immense majorité des cas, la fabrication dans un bâtiment d'un conduit de transport et de distribution d'air conditionnée oblige à réaliser des changements de directions du conduit et donc de son isolation pour opérer la distribution de l'air dans différentes pièces contiguës et à différents étages.

Dans l'art antérieur, il est exposé que pour réaliser un changement de direction dans un conduit de distribution, il est préférable de décomposer ce changement de direction en une multitude de sections droites agencées de manière à ce que leurs axes principaux respectifs ne soit écartés du précédant et du suivant que de quelques degrés.

De cette manière, on pensait que le flux d'air transitant à l'intérieur du conduit subirait alors le moins de modifications possibles de ses caractéristiques intrinsèques.

Or, il apparaît d'une manière surprenante que c'est en réalité l'inverse : pour modifier le moins possible les caractéristiques intrinsèques du flux d'air transitant à l'intérieur du conduit, il est préférable de décomposer le changement de direction en un plus petit possible nombre de sections droites et d'agencer ces sections de manière à ce que leurs axes principaux respectifs soient écartés du précédant et du suivant du plus grand angle possible ; Toutefois, l'angle droit et les angles aigus (inférieurs à 90°) sont à proscrire.

Ainsi, ledit angle β est compris sensiblement entre 30° et 60° et de préférence égal sensiblement à 45°.

A titre d'exemple, lorsque les pertes de charge dans un coude à angle droit de section 30x30 cm, sont de 8 Pa pour un conduit fabriqué selon la méthode antérieure à une vitesse de l'air de 7 m/s, elles ne sont que de 5 Pa pour un conduit fabriqué selon la méthode du présent exposé avec une section et une vitesse d'air identiques.

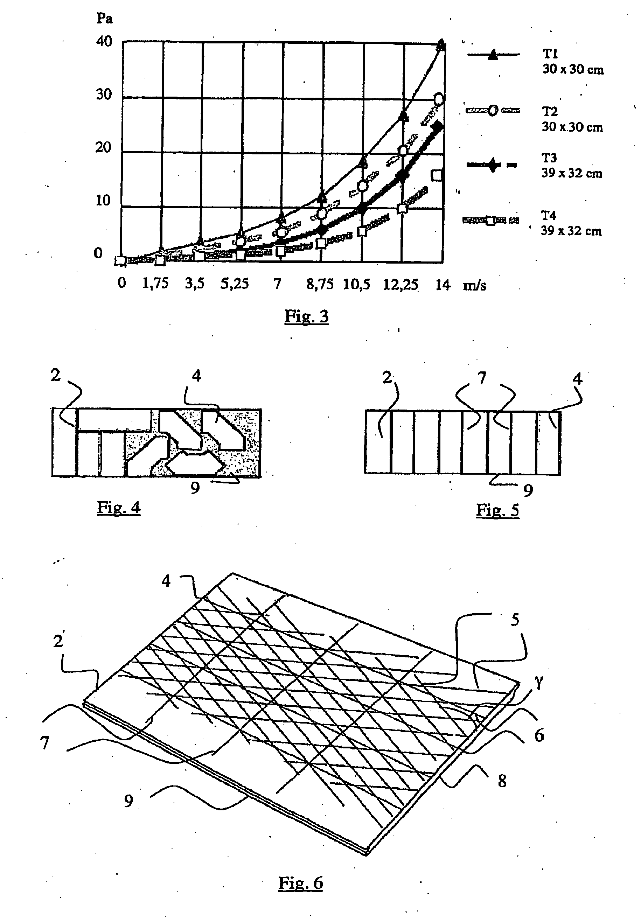

La figure 3 illustre les mesures de perte de charge (en Pa) réalisées sur quatre types de coudes à angle droit (T1 à T4), de section carrée 30x30 cm pour T1 et T2 et de section rectangulaire 39x32 cm pour T3 et T4 en fonction de la vitesse du flux d'air (en m/s), T1 et T3 étant réalisés selon la méthode antérieure et T2 et T4 étant fabriqués selon la méthode du présent exposé.

Cette figure montre que les pertes de charge dans un coude de section donnée fabriqué selon la méthode de la présente invention (Courbe T2 en trait interrompu et cercle vide ; Courbe T4 en trait interrompu et carré vide) sont inférieures à celles du coude de même section donnée fabriqué selon la méthode antérieure (courbe T1 en trait continu, triangle plein ; Courbe T3 en trait continu, losange plein), quelle que soit la vitesse du flux à l'intérieur du coude.

La méthode du présent exposé permet d'éliminer les irrégularités formées à la surface intérieure du conduit lorsque l'on réalise une figure en utilisant la méthode antérieure et permet ainsi de réduire les pertes de charge à travers le conduit sinon engendrées par ces irrégularités.

La fabrication des diverses figures du réseau de conduits commence par le tracé, sur le panneau, des différentes pièces qui seront par la suite coupées et assemblées à l'aide d'un nombre réduit d'outils légers et faciles à manipuler.

Le procédé de fabrication de ces figures présente deux variantes de mise en oeuvre et d'utilisation du panneau (2) selon l'invention.

Dans la première variante de mise en oeuvre du procédé, ledit changement de direction C est réalisé par découpage dans un panneau plat (2), tel que celui illustré figure 4, de chacune des faces dudit conduit (1).

Dans cette première variante, les faces du conduit qui sont parallèles au plan comprenant ledit changement de direction C présentent chacune plus de quatre côtés dans ce plan et de préférence six côtés pour un simple changement de direction ou huit côtés pour un double changement de direction permettant au final de réaliser un changement de direction à angle droit. De cette manière, l'étanchéité de l'isolation est encore mieux assurée au niveau du changement de direction.

Dans la deuxième variante, le changement de direction C est réalisé par section complète, c'est-à-dire découpage complet, d'un conduit (1) amont en un tronçon primaire aval (1') et éventuellement un tronçon secondaire aval (1") si le changement de direction est double, ainsi que, éventuellement, rotation autour de son axe du tronçon primaire (1'), voir du tronçon secondaire (1"). Le conduit (1-1'-1") est réalisé à partir d'un panneau (2) tel que celui illustré sur la figure 5.

Il est à noter que la première variante du procédé produit environ 1,5 m² de chutes pour fabriquer deux coudes à 90° de 30x35 cm (environ), illustrées en grisé sur la figure 4, alors que la deuxième variante ne produit aucune chute pour la fabrication des deux même figures.

Les figures 1 et 2 représentent schématiquement cette deuxième variante de mise en oeuvre du procédé à partir d'un tronçon droit pour obtenir un changement de direction selon un angle α.

Selon cet exemple, on part d'un conduit tubulaire (1), de section rectangulaire, sur quatre faces duquel on effectue, de façon traditionnelle et par des mesures adéquates, quatre marques rectilignes (20, 20', 20", 20'") sur les quatre faces du conduit, qui, dans le cas des lignes ou marques (20, 20") forment un angle β par rapport à une ligne transversale de la face concernée au niveau coin du conduit, et qui, dans le cas des lignes (20', 20"), sont parallèles à ladite ligne transversale de la face concernée. L'angle β est l'angle complémentaire de α, c'est-à-dire que α + β = 180°.

Les coupes selon les lignes de marquage (20', 20"') sont réalisées perpendiculairement à la face du conduit concernée, mais les coupes selon les ligne de marquage (20, 20") sont réalisée selon un angle γ =90° - β. Ces coupes permettent de réaliser un tronçon de conduit primaire aval (1') dans le conduit tubulaire (1).

Pour obtenir le conduit (1-1') coudé selon un angle α illustré sur la figure 2, il suffit de tourner le tronçon primaire (1') de 180° et de positionner les bords arrières du tronçon primaire aval (1') contre les bords avant du conduit tubulaire (1) amont. Le conduit (1-1') forme alors un coude obtus, autrement dit selon un angle α supérieur à 90°, pour entraîner un changement de direction du flux d'air F.

La figure 6 illustre un panneau (2) pour la réalisation du conduit tubulaire (1) selon la première ou la deuxième variante de mise en oeuvre du procédé.

Ce panneau (2) comporte au moins une couche isolante (3) en laine minérale et de préférence en laine de verre et présente une forme sensiblement parallélépipédique et plate. Il comporte également une couche extérieure (4) qui sera à l'extérieur du conduit tubulaire d'isolation (1) lorsque celui-ci sera formé, et éventuellement une couche intérieure (4') qui sera à l'intérieur du conduit tubulaire (1) lorsque celui-ci sera formé. La couche extérieure (4) est destinée à être mise sensiblement en contact avec la paroi métallique du conduit de transport d'activité inventive conditionnée.

La couche extérieure (4) présente sur sa face extérieure une pluralité de marques rectilignes (5) et obliques par rapport aux bords longitudinaux (8) dudit panneau, lesdites marques formant deux faisceaux de lignes, un faisceau étant incliné selon un angle γ = 67,5° par rapport auxdits bords longitudinaux (8) et l'autre faisceau étant orienté d'un angle contraire de -γ par rapport auxdits bords longitudinaux (8).

La couche extérieure (4) présente en outre une pluralité de marques rectilignes transversales (6), orientées perpendiculairement auxdits bords transversaux (9) et une pluralité de marques rectilignes longitudinales (7) orientées selon la direction des bords longitudinaux (8).

Les marques rectilignes (5, 6, 7) permettent ainsi de calibrer la plaque (2) et, de ce fait, le corps tubulaire (1), de façon à faciliter la réalisation des marquages préalable aux découpages et les découpages.

Ces marques (5, 6, 7) servent donc à faciliter à la fois le marquage et le mouvement de l'outil de coupe pour la réalisation des découpages.

Les marques (5) n'ont été illustrée que sur une seule face du conduit (1) sur la figure 2 afin d'en faciliter la lecture, mais il est évident qu'elles sont présentent sur toutes les faces du conduit (1)..

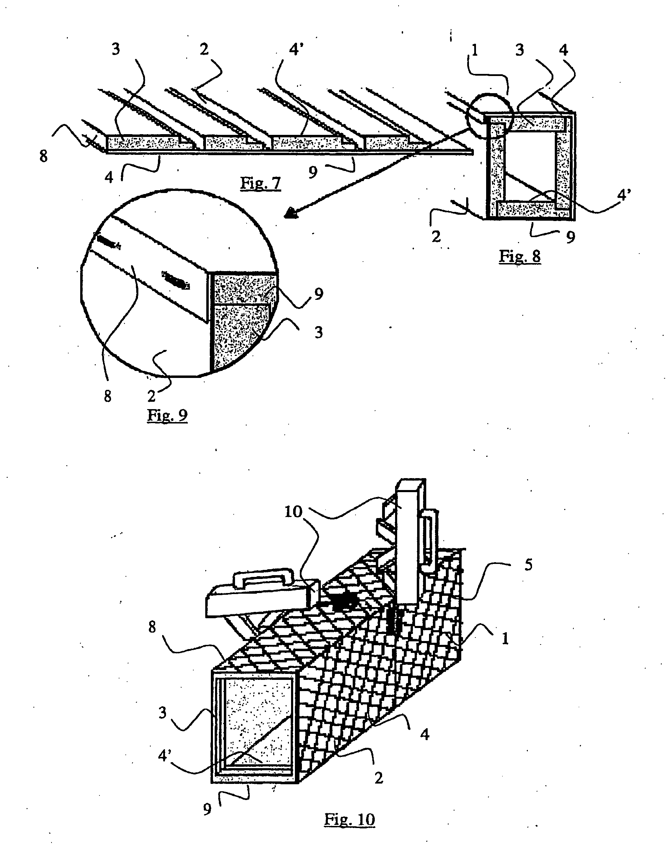

Les figures 7, 8 et 9 illustrent un exemple de réalisation d'un conduit (1) à partir d'une seule plaque (2) repliée selon quatre arêtes longitudinales à angle droit, selon la deuxième variante de mise en oeuvre du procédé.

Comme on peut le voir sur la figure 7, les quatre pièces du panneau destinées à former les faces du conduit présentent chacune un bord longitudinal droit et un bord longitudinal opposé profilé en une marche d'escalier, autrement dit doté d'une feuillure de profondeur égale au chant de la pièce qu'elle va recevoir lors du pliage à 90° et d'épaisseur égale à la moitié de l'épaisseur de celui-ci. Une des pièces comporte en outre un prolongement de la couche extérieure qui sera agrafé par-dessus l'autre pièce, comme on peut le voir sur la figure 9.

Pour certains panneaux, le scellage se fait à l'aide d'une bande de tissu imprégnée de plâtre et de colle ou à l'aide d'un ruban adhésif en aluminium.

Le scellage des conduits est particulièrement étanche, les fuites d'air vers l'extérieur du conduit étant négligeables à condition que celui-ci ait été fabriqué et assemblé correctement.

Le raccord transversal d'éléments pour former le réseau de conduits se fait en plaçant les surfaces de deux tronçons de conduit dans un même plan, en agrafant le rabat d'un des tronçons sur l'autre (sans rabat) et en scellant le raccord à l'aide d'un ruban adhésif. Les bords transversaux (9) des éléments à raccorder sont profilés de façon à former une section dite « mâle » et une autre dite « femelle ». Sur ces bords transversaux, la densité de la laine de verre est beaucoup plus importante, ce qui accroît la rigidité du raccord et améliore le montage.

Le découpage des panneaux (2), soit à plat, soit formés en conduit, peut être réalisé à l'aide d'une scie circulaire reliée à un système d'aspiration. La scie circulaire sera dotée d'un dispositif permettant d'incliner l'angle de coupe, afin de permettre d'effectuer des coupes perpendiculaires, des coupes à 22,5° par rapport à la verticale et des coupes à 45°, voire à d'autres angles.

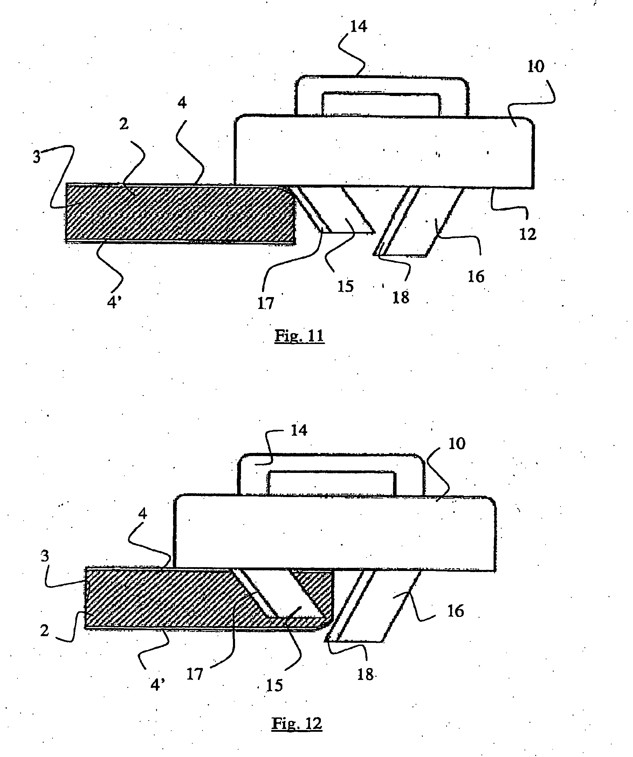

Dans une version préférée, le découpage des panneaux (2), soit à plat, soit formés en conduit, est opéré à l'aide d'un instrument de découpage (10) particulier illustré tout d'abord à la figure 10 pour la mise en oeuvre de la deuxième variante. Cet instrument (10), illustré en détail figures 11 à 15, présente une surface de guidage (12) destinée à glisser sur la surface du panneau (2), une poignée (14) et deux lames (15, 16) situées dans un même plan et présentant chacune un bord tranchant (17, 18). Ces bord tranchants (17, 18) sont orientés dans ce plan selon des inclinaisons contraires par rapport à la surface de guidage (12).

Le premier bord tranchant (17), celui de la première lame (15), est orienté vers l'arrière au regard de la direction de découpage et présente une hauteur inférieure au deuxième bord tranchant (18), celui de la deuxième lame (16), qui est orienté vers l'avant ; toutefois, les deux lames (15, 16) ne se touchent pas. Le premier bord tranchant (17) présente une hauteur inférieure à l'épaisseur totale du panneau (2) et le deuxième bord tranchant (18) présente une hauteur supérieure à l'épaisseur totale du panneau (2).

Ainsi, comme on peut le voir sur la figure 11, lors du commencement du découpage, lorsque la première lame (15) va entamer la surface extérieure (4) elle va provoquer l'enfoncement de cette surface vers l'âme du panneau avant de découper correctement cette surface et comme on peut le voir sur la figure 12, lorsque la deuxième lame (16) va ensuite entamer la surface intérieure (4') elle va provoquer également l'enfoncement de cette surface vers l'âme du panneau avant de découper correctement cette surface. Aucun délaminage ne peut donc se produire lors du découpage du panneau car l'angle d'attaque des bords tranchant est toujours aigu, de chaque côté du panneau.

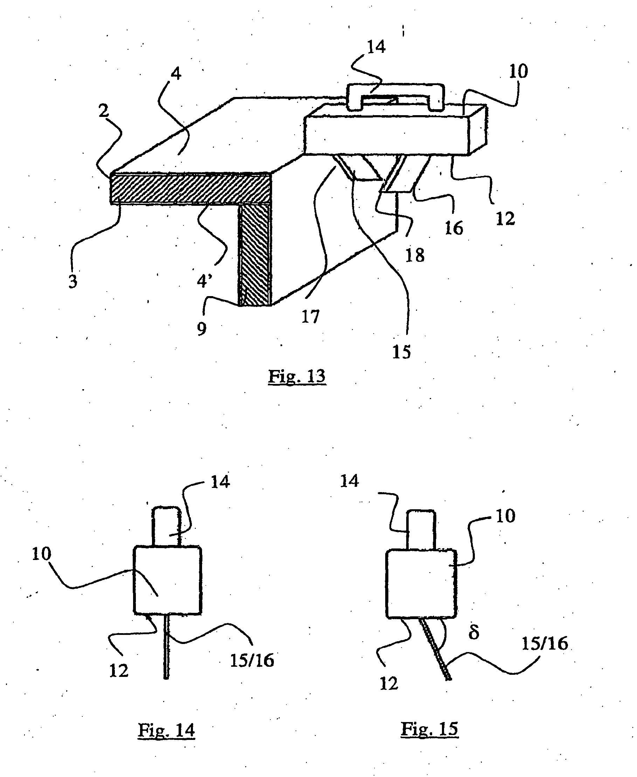

L'instrument (10) permet également de découper un panneau (12), même lorsque celui-ci est déjà agencé pour former un conduit, comme on peut le voir sur la figure 13. Grâce à la disposition des lames (15, 16) et de leurs bords tranchants (17, 18) respectifs, il et possible de commencer à découper un conduit dans un angle sans provoquer de bavure, ni de délaminage.

Dans une première version illustrée figure 14, l'instrument (10) de découpage présente, des lames (15, 16) droites, c'est-à-dire orientées perpendiculairement à la surface de guidage (12). Cette version permet de réaliser des coupes droites, comme les coupes (20 et 20") sur les figures 1 et 2.

Dans une deuxième version illustrée figure 15, l'instrument (10) de découpage présente, des lames (15, 16) inclinées, c'est-à-dire orientées selon un angle δ par rapport à la surface de guidage (12). Cette version permet de réaliser des coupes inclinées, comme les coupes (20' et 20"') sur les figures 1 et 2. Dans ce cas, γ = δ.

Il est possible de prévoir que les lames (15, 16) soient munies d'un système permettant de régler leur inclinaison par rapport à la surface de guidage (12), ou que les lames (15, 16) soient amovibles et coopèrent avec un rail ménagé dans la surface de guidage (12), une pluralité de types de rail imposant des inclinaisons de lames différentes.

On détaille par la suite des constructions de changements de direction à l'aide de la deuxième variante du procédé.

On évitera toujours de construire des changements de direction, (coudes ou tout autre type de figure), caractérisés par des courbes pures (circulaires) dans la mesure où ceux-ci nécessitent davantage de coupes du revêtement intérieur du conduit, ce qui affaiblit la figure et peut éventuellement endommager la laine de verre en cas de mauvaise exécution de la coupe.

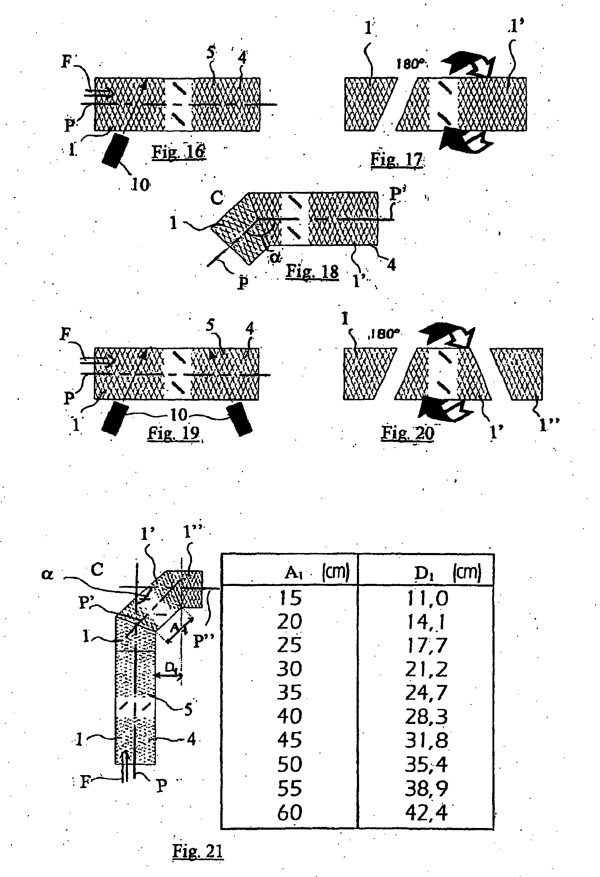

### a. Coudes d'angles α supérieurs à 90° (figures 16 à 18)

Pour réaliser un coude d'angle α supérieur à 90°, on marque la ligne de coupe sur la surface extérieure (4) du conduit (1) en s'aidant des marques (5), comme l'illustre la figure 16, et on coupe à la scie circulaire tangentielle ou de préférence en utilisant l'instrument (10), en suivant le plan imaginaire traversant le conduit perpendiculairement à l'axe principal P et passant par cette ligne de coupe. Les coupes inclinées à β° sont réalisées de préférence en premier, avant celles perpendiculaires à la surface (4) du conduit.

Comme on peut le voir sur la figure 17, le conduit est tourné de 180° sur lui-même, puis est positionné de manière à ce que sont axe P' coupe l'axe P du conduit amont, comme on peut le voir sur la figure 18.

Comme il n'est pas possible d'effectuer un emboîtement mâle-femelle ni d'utiliser de rabats pour agrafer les deux pièces constitutives du coude, on applique un cordon de colle le long des bords à raccorder, et ce à proximité du bord intérieur du conduit. On scellé ensuite la zone de raccord, à l'extérieur et sur le périmètre, à l'aide d'un ruban adhésif en aluminium. Le ruban maintiendra la forme et la rigidité du raccord, tant à l'intérieur qu'à l'extérieur.

Pour réduire les pertes de charge, il est conseillé de prévoir des déflecteurs dans les coudes dont l'angle α est inférieur à 135°. On fixera la plaque qui maintient les déflecteurs ou les ailettes à l'intérieur du conduit au moyen de vis autotaraudeuses et de rondelles mises en place par l'extérieur.

### b. Coudes d'angles α à 90° (figures 19 à 21)

Pour réaliser un coude d'angle α à 90°, on marque sur la surface extérieure (4) du conduit (1), comme l'illustre la figure 19, un angle de 22,5° par rapport à une section perpendiculaire imaginaire, et on trace une ligne. On trace ensuite la même ligne sur la face opposée et on rejoint ces deux lignes par des lignes transversales tracées sur les deux faces restantes.

La surface extérieure (4) du panneau comporte un gabarit formé de marques (5) facilitant le tracé des droites qui serviront de lignes de coupe.

On coupe à la scie circulaire tangentielle ou de préférence en utilisant l'instrument (10), le conduit en suivant les lignes, en accordant une attention particulière à l'inclinaison de la coupe (perpendiculaire à la surface du conduit pour les lignes formant un angle de 22,5 °, et incliné de 22,5° pour les lignes transversales). On obtient ainsi la première des trois pièces qui formeront le coude : le conduit principal (1).

A une distance de plus de 15 cm de la première section, on réalise la même opération, mais suivant un angle de -22,5° par rapport à une section perpendiculaire imaginaire. On obtient ainsi les trois tronçons (1,1', 1") de conduit.

On tourne ensuite de 180° sur elle-même la pièce intermédiaire du conduit formée par le tronçon primaire (1'), comme illustré figure 20, pour former le coude et on raccorde les trois tronçons (1, 1', 1") de manières à ce que leurs axes respectifs (P, P', P") se coupent deux à deux au niveau des raccordements respectifs selon un angle à 45 °, comme illustré figure 21. L'angle α entre l'axe le plus amont P et l'axe le plus aval P" est de 90 °.

On accordera une attention toute particulière à la précision de la mesure de l'angle de 22,5°, sous peine d'obtenir des coudes de moins de 90° (coudes fermés) ou de plus de 90° (coudes ouverts).

Il n'est pas nécessaire, dans ce cas, de prévoir de déflecteurs.

Le scellage des pièces se fait comme dans le paragraphe précédent.

Le tableau de la figure 21 expose les écartements D₁ entre le conduit principal (1) et le tronçon secondaire (1") en fonction de la longueur minimale A₁ du tronçon primaire (1').

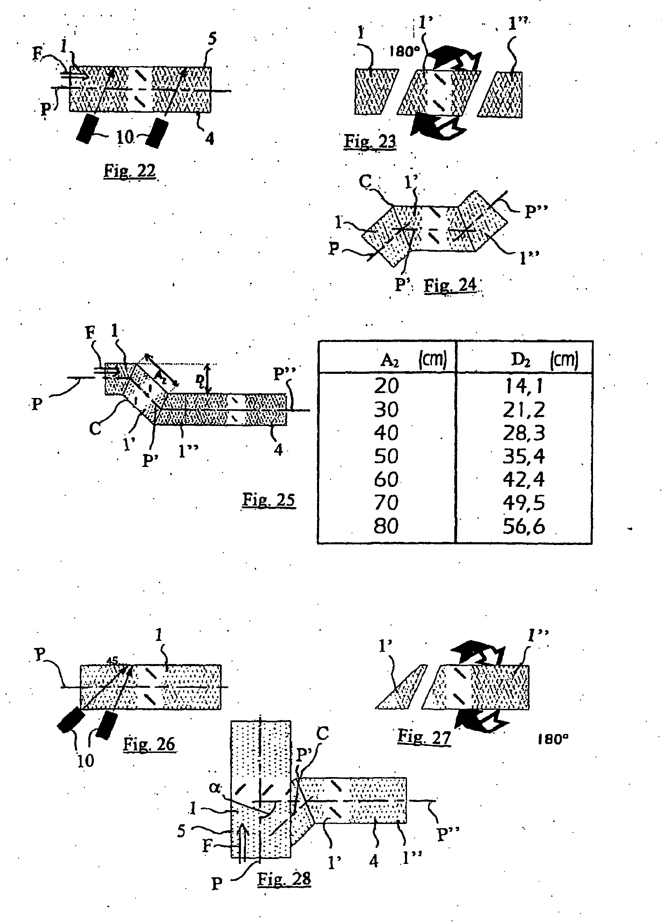

### c. Inflexions (figures 22 à 25)

L'inflexion est une déviation de la direction du conduit parfois nécessaire si l'on veut éviter les obstacles présents sur la trajectoire droite du conduit. La section du conduit est maintenue constante sur tout son parcours.

La méthode de réalisations d'une inflexion est très proche de la méthode de réalisation d'un coude à 90°.

Pour réaliser une inflexion, on marque sur la surface extérieure (4) du conduit (1), comme l'illustre la figure 22, un angle de 22,5° par rapport à une section perpendiculaire imaginaire, et on trace une ligne. On trace ensuite la même ligne sur la face opposée et on rejoint ces deux lignes par des lignes transversales tracées sur les deux faces restantes.

La surface extérieure (4) du panneau comporte un gabarit formé de marques (5) facilitant le tracé des droites qui serviront de lignes de coupe.

On coupe à la scie circulaire tangentielle ou de préférence en utilisant l'instrument (10), le conduit en suivant les lignes, en accordant une attention particulière à l'inclinaison de la coupe (perpendiculaire à la surface du conduit pour les lignes formant un angle de 22,5°, et incliné de 22,5° pour les lignes transversales). On obtient ainsi la première des trois pièces qui formeront l'inflexion : le conduit principal (1).

A une distance de plus de 20 cm de la première section, on réalise la même opération, mais suivant un angle identique de +22,5°. On obtient ainsi les trois tronçons (1, 1', 1") de conduit.

On tourne ensuite de 180° sur elle-même la pièce intermédiaire du conduit formée par le tronçon primaire (1'), comme illustré figure 23, pour former l'inflexion et on raccorde les trois tronçons (1, 1', 1") de manières à ce que leurs axes respectifs (P, P', P") se coupent deux à deux selon un angle à 45°, comme illustré figure 24. L'axe le plus amont P et l'axe le plus aval P" sont alors parallèles.

On accordera une attention toute particulière à la précision de la mesure de l'angle de 22,5 °, sous peine d'obtenir une perte du parallélisme entre l'axe le plus amont P et l'axe le plus aval P".

Il n'est pas nécessaire, dans ce cas, de prévoir de déflecteurs.

Le scellage des pièces se fait comme dans le paragraphe précédent.

Le tableau de la figure 25 expose les écartements D₂ entre le conduit principal (1) et le tronçon secondaire (1") en fonction de la longueur minimale A₂ du tronçon primaire (1').

### d. Ramifications simples selon un angle α droit sans modification de la section du conduit principal (figures 26 à 28)

Pour réaliser une ramification simple selon un angle α droit sans modification de la section du conduit principal, on marque sur la surface extérieure (4) du conduit (1), comme l'illustre la figure 26, un angle de 45° par rapport à une section perpendiculaire imaginaire, et on trace une ligne. On trace ensuite la même ligne sur la face opposée et on rejoint ces deux lignes par des lignes transversales tracées sur les deux faces restantes.

La surface extérieure (4) du panneau comporte un gabarit formé de marques (5) facilitant le tracé des droites qui serviront de lignes de coupe.

On coupe à la scie circulaire tangentielle ou de préférence en utilisant l'instrument (10), le conduit en suivant les lignes, en accordant une attention particulière à l'inclinaison de la coupe (perpendiculaire à la surface du conduit pour les lignes formant un angle de 45°, et incliné de 45° pour les lignes transversales). On obtient ainsi la première section de la pièce qui formera la ramification.

A une distance de plus de 5 cm de la première section, on réalise la même opération, mais suivant un angle de 22,5° par rapport à une section perpendiculaire imaginaire. On obtient ainsi les trois tronçons (1,1', 1") de conduit.

On tourne ensuite de 180° sur elle-même la pièce finale du conduit formée par le tronçon secondaire (1"), comme illustré figure 27, pour former la ramification et on raccorde les trois tronçons (1,1', 1") de manières à ce que leurs axes respectifs (P, P', P") se coupent deux à deux selon un angle à 45°, comme illustré figure 28. L'angle α entre l'axe le plus amont P et l'axe le plus aval P" est de 90°.

On accordera une attention toute particulière à la précision de la mesure des angles de 45° et de 22,5°, sous peine d'obtenir des ramifications de moins de 90° (ramifications fermées) ou de plus de 90° (ramifications ouvertes).

Il n'est pas nécessaire, dans ce cas, de prévoir de déflecteurs.

Le scellage des pièces se fait comme dans le paragraphe précédent.

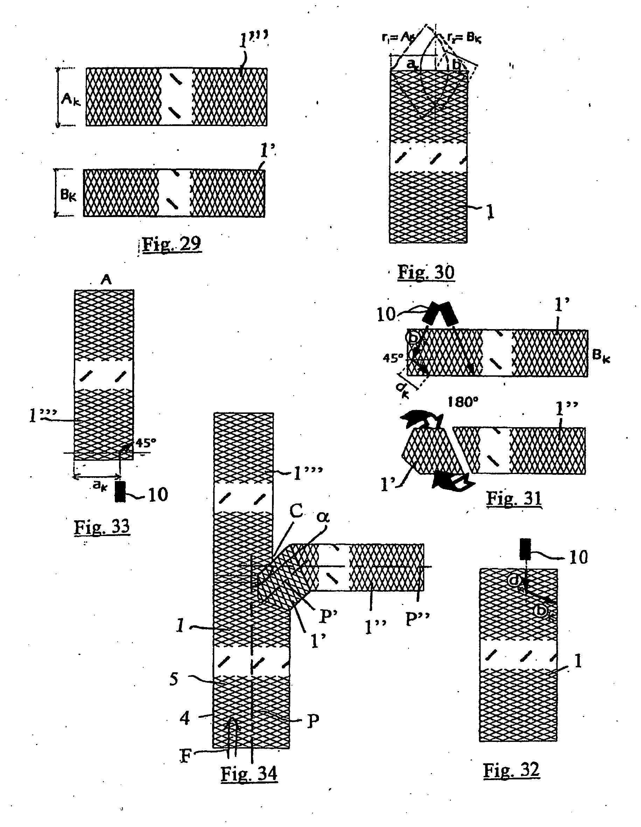

### e. Ramifications simples selon un angle α droit avec modification de la section du conduit principal (figures 29 à 34)

Pour réaliser une ramification simple selon un angle α droit avec modification de la section du conduit principal, on utilise trois tronçons droits. Le premier tronçon constitue le tronçon principal (1), illustré figure 30, le deuxième tronçon constitue le tronçon primaire (1'), illustré figure 29, de largeur B_{K}, et servira également à fabriquer le tronçon secondaire (1") et le troisième tronçon constitue le tronçon tertiaire (1"'), également illustré figure 29, de largeur A_{K}.

La première étape consiste à tracer une ligne longitudinale imaginaire et passant par l'intersection des courbes de rayon r₁ = A_{K} et r₂ = B_{K} sur la surface extérieure du tronçon principal (1), comme illustré figure 30. Le raccord de la continuation du tronçon principal en tronçon tertiaire et de l'embranchement passe par cette ligne.

A partir de cette ligne, on mesure d'un côté la largeur réduite a_{K} du tronçon tertiaire (1"') au niveau de l'intersection que l'on reporte sur le tronçon tertiaire (1"'), comme illustré sur la figure 33 et on trace sur la surface extérieure de l'autre côté une droite inclinée de 22,5° par rapport à une section perpendiculaire imaginaire, pour obtenir ainsi la mesure de la largeur réduite b_{K} du tronçon primaire (1') que l'on reporte sur le tronçon primaire (1'), comme illustré sur la figure 31 selon une droite inclinée à 22,5° par rapport à une section perpendiculaire imaginaire.

Une fois les mesures a_{K} et b_{K} reportées, on joint les points intérieurs par deux droites 1 inclinées à 45° jusqu'aux extrémités longitudinales des tronçons.

Sur le tronçon primaire (1'), à une distance de plus de 15 cm de la première section, on réalise une seconde section, suivant un angle de 22,5° par rapport à une section perpendiculaire imaginaire pour former le tronçon secondaire (1"), le tronçon primaire devant alors être tourné sur lui-même de 180 °, comme pour un coude à angle droit (cf. point b).

Sur le tronçon primaire (1') la valeur mesurée d_{K} de ce segment, doit être reportée sur le conduit principal (1), illustré figure 32, puis la largeur b_{K} doit être reportée, selon une droite inclinée à 22,5° par rapport à une transversale du conduit principal (1).

Pour former la ramification, on raccorde les quatre tronçons (1, 1', 1", 1"') de manières à ce que les axes respectifs (P, P', P") des tronçons (1, 1', 1") se coupent deux à deux selon un angle à 45 ° et que les axes du tronçon principal (1) et du tronçon tertiaire (1"') soient parallèles, comme illustré figure 34. L'angle α entre l'axe le plus amont P et l'axe le plus aval P" de la ramification est de 90°.

On accordera une attention toute particulière à la précision de la mesure des angles de 45° et de 22,5 °, sous peine d'obtenir une ramification de moins de 90° (ramification fermée) ou de plus de 90° (ramification ouverte).

Il n'est pas nécessaire, dans ce cas, de prévoir de déflecteurs.

Le scellage des pièces se fait comme dans les paragraphes précédents.

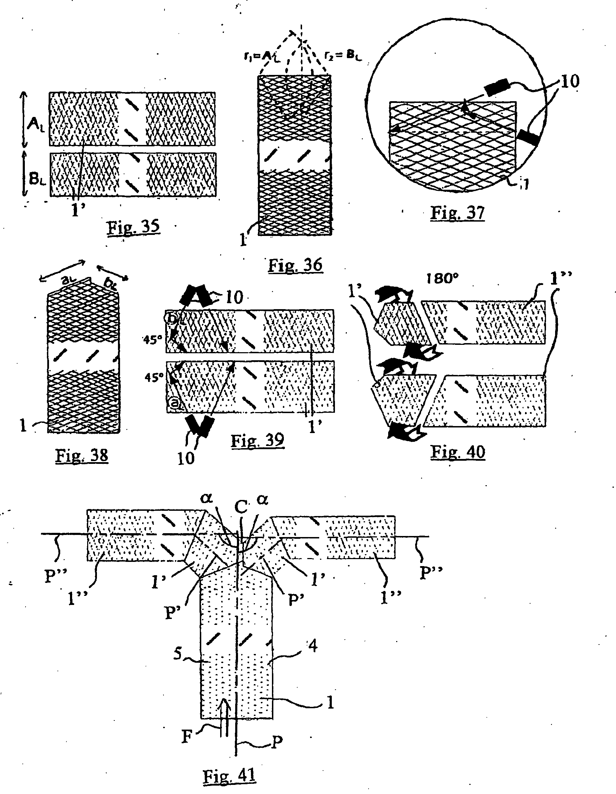

### f. Ramifications doubles à deux angles α droits (figures 35 à 41)

Les coudes des embranchements de cette figure couramment appelée « pantalon » sont réalisés comme on l'a décrit dans le paragraphe b précédent. Chaque embranchement (gauche, droit) est ainsi formé d'un tronçon primaire (1') et d'un tronçon secondaire (1"), les tronçons secondaires (1") gauche et droit étant issu respectivement des tronçons primaires (1') gauche et droit. Les deux coudes à 90° (gauche, droit) peuvent présenter des sections avales différentes, dont la somme est supérieure à la section du conduit principal, leur hauteur devant toutefois être identique à celle du tronçon principal.

La première étape consiste à tracer une ligne longitudinale et passant par l'intersection des courbes de rayon r₁ = A_{L} et r₂ = B_{L}, comme illustré figure 36, A_{L}, et B_{L} représentant la largeur, respectivement des sections intérieures des embranchements gauche et droit, comme illustré figure 35. Le raccord des deux embranchements passe par cette ligne. A partir de cette ligne, on trace de chaque côté deux droites inclinées de 22,5°, pour obtenir ainsi les mesures a_{L} et b_{L} que l'on reporte sur les embranchements, comme illustré sur la figure 39.

Une fois les mesures a_{L} et b_{L} reportées selon deux droites inclinées à 22,5° sur chaque embranchement, on joint les points intérieurs par deux droites inclinées à 45 ° jusqu'aux extrémités des embranchements. La différence entre les valeurs de ceux segments, doit être reportée sur le conduit principal (1), illustré figures 37 et 38, et constitue la séparation entre les deux tronçons primaires (1') inclinés à 22,5 ° et le conduit principal (1).

On vérifiera facilement que si la somme des sections intérieures des embranchements est égale à la section intérieure du conduit principal, cette différence a pour valeur 0, et il suffit de couper les bords des pièces à 45 ° dans la zone de raccord des embranchements. Il est conseillé d'effectuer cette coupe en premier, avant les coupes correspondant à a_{L} et b_{L}.

Comme précédemment, il est bien sûr nécessaire d'entourer la partie extérieure des raccords de ruban adhésif et de coller la partie intérieure des raccords du conduit.

## Revendications

1. Panneau d'isolation (2) pour conduit de distribution d'air conditionné (1), ledit panneau d'isolation (2) comportant une âme isolante (3) à base de laine minérale, de préférence de laine de verre, et comportant une couche extérieure (4) par exemple à base d'une fine pellicule d'aluminium, **caractérisé en ce qu'**il présente sur la face extérieure de la couche extérieure une pluralité de marques rectilignes (5) et obliques par rapport à une direction longitudinale dudit panneau, lesdites marques formant deux faisceaux d'inclinaisons contraires et orientées selon un angle γ égal à 67,5° par rapport à ladite direction longitudinale, et **en ce que** ladite face extérieure présente en outre une pluralité de marques rectilignes longitudinales (7) orientées parallèlement à ladite direction longitudinale.

2. Panneau d'isolation (2) la revendication 1, **caractérisé en ce que** ladite face extérieure présente en outre une pluralité de marques rectilignes transversales (6) orientées perpendiculairement à ladite direction longitudinale.

3. Conduit de distribution (1) présentant une section sensiblement parallélépipédique constitué à partir d'au moins un panneau d'isolation (2) selon l'une quelconque des revendications précédentes.

## Patentansprüche

1. Isolierplatte (2) für eine Leitung zum Verteilen klimatisierter Luft (1), wobei die Isolierplatte (2) einen isolierenden Kern (3) auf der Basis von Mineralwolle, vorzugsweise Glaswolle, aufweist und eine Außenschicht (4) beispielweise auf der Basis eines dünnen Aluminiumfilms umfasst, dadurchgekennzeichnet, dass sie auf einer Außenseite der Außenschicht eine Vielzahl von geradlinigen und gegenüber einer Längsrichtung der Platte schräg verlaufenden Markierungen (5) aufweist, wobei die Markierungen zwei Gruppen mit entgegengesetzten Neigungen bilden, die unter einem Winkel γ gleich 67,5° gegenüber der Längsrichtung ausgerichtet sind, und dadurch, dass die Außenseite außerdem eine Vielzahl von geradlinigen Längsmarkierungen (7) aufweist, die parallel zur Längsrichtung ausgerichtet sind.

2. Isolierplatte nach Anspruch 1, **dadurch gekennzeichnet, dass** die Außenseite ferner eine Vielzahl von geradlinigen querverlaufenden Markierungen (6) aufweist, die senkrecht zur Längsrichtung ausgerichtet sind.

3. Verteilungleitung (1) mit einem im wesentlichen quaderförmigen Querschnitt, die aus wenigstens einer Isolierplatte (2) nach einem der vorgehenden Ansprüche gebildet ist.

## Claims

1. An insulating panel (2) for a conditioned-air distribution duct (1), said insulating panel (2) comprising an insulating core (3) based on mineral wool, preferably on rock wool, and comprising an exterior layer (4) for example based on a thin skin of aluminum, **characterized in that** on the exterior face of the exterior layer it has a plurality of marks (5) that are straight and oblique with respect to a longitudinal direction of said panel, said marks forming two sets of opposing inclinations oriented at an angle γ equal to 67.5° with respect to said longitudinal direction, and **in that** the said exterior face also has a plurality of longitudinal straight marks (7) oriented parallel to said longitudinal direction.

2. The insulating panel (2) as claimed in claim 1, **characterized in that** said exterior face also has a plurality of transverse straight marks (6) oriented at right angles to said longitudinal direction.

3. A distribution duct (1) having a substantially parallelepipedal cross section, the duct being made from at least one insulating panel (2) as claimed in any one of the preceding claims.
